(19) 

**Europäisches Patentamt**
**European Patent Office**
**Office européen des brevets**

(11) **EP 4 451 289 A1**

(12) **EUROPEAN PATENT APPLICATION**

(43) Date of publication:
**23.10.2024 Bulletin 2024/43**

(21) Application number: **23169032.2**

(22) Date of filing: **20.04.2023**

(51) International Patent Classification (IPC):
**G21C 7/34** *(2006.01)* **G21C 1/22** *(2006.01)*
**G21C 3/54** *(2006.01)*

(52) Cooperative Patent Classification (CPC):
**G21C 1/22; G21C 3/54; G21C 7/34**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Seaborg Technologies
2200 Copenhagen (DK)**

(72) Inventors:
• **ELTER, Zsolt
  2200 Copenhagen (DK)**
• **SCHOFIELD, Vigand Andreas
  2200 Copenhagen (DK)**

(74) Representative: **Meissner Bolte Partnerschaft
mbB
Patentanwälte Rechtsanwälte
Postfach 86 06 24
81633 München (DE)**

(54) **A METHOD OF OPERATING A MOLTEN SALT REACTOR**

(57)    The present invention relates to a method of operating a molten salt reactor (MSR).

Figure 1

EP 4 451 289 A1

**Description**

**Field of the invention**

The present invention relates to a method of operating a molten salt reactor (MSR) where an alpha-emitter is added to a fluoride- or chloride based molten salt. The method allows a convenient source of neutrons during the operation of the MSR for example in the start-up of an MSR.

**Background of the Invention**

Molten salt reactors (MSRs) are based on a critical concentration of a fissile material dissolved in a molten salt. The molten salt comprising the fissile material is commonly referred to as the fuel salt or molten fuel salt. Research was conducted on MSRs initially at the Oak Ridge National Laboratory (ORNL) in the 1950's and 1960's but is yet to be successfully commercialised. MSRs have several advantages over other reactor types, including those being in commercial use nowadays. MSRs are capable of breeding fissile U-233 from thorium, of producing much lower levels of transuranic actinide waste than uranium/plutonium fuelled reactors; capable of operating at high temperatures, capable of avoiding accumulation of volatile radioactive fission products in solid fuel rods and capable of combusting larger amounts of fissile material than is possible in conventional reactors. Other particular attractive features of an MSR is the operation at ambient or low pressure and the retention of the fission products as strongly bonded salts which is conventionally either fluoride salts or chloride salts.

To safely operate an MSR the presence of neutrons is needed when the power level is low as for example at the beginning phase of or before startup of the MSR. Some neutrons are inherently present in a nuclear reactor and play a role at the very early stages of a startup. The existence of these neutrons is e.g., due to (a,n)-reactions meaning (alpha,n)-reactions and to spontaneous fission. It is necessary to estimate the inherent neutron emission rate and assess whether it is considered a weak or strong source. Source neutrons are important for safety considerations. The source neutrons influence the neutron population especially during low-power reactor operation for example during reactor startup or reactor shutdown. A general consideration is that a strong source provides a safer startup with a high neutron count because the fluctuations of the number of neutrons are negligible and sudden bursts of neutrons while removing the control rods are avoided. This effect is more pronounced for some types of MSRs than for other types. In addition to or as an alternative to a strong inherent source of neutron, it is known to add an external source of neutrons. An external source of neutrons might be added as a startup neutron source for a stable start of the nuclear chain reaction in a fresh nuclear fuel comprising fissile material. An external source provides a smooth startup and power excursions during startup are avoided when the inherent source is weak.

The external sources are important for a safe reactor startup. Such sources can also solve another problem during startup namely the occurrence of a "blind" start. A blind start can occur because the neutron flux detectors may not be able to detect a reliable measure of the neutron flux because the flux has a low value. The flux value may be sufficiently high to qualify as a strong source, but it is on the other hand not possible to detect and monitor this, hence the name a "blind" start. A minimum count rate must be detectable to provide the necessary control in the subcritical state during a startup.

A conventional external neutron source may be Cf-252 which produces neutrons by spontaneous fission and is termed a primary source of neutrons since it does not need to be irradiated to produce neutrons. Or it may be an alpha-emitter such as Pu-238, Am-241, Po-210 or Ra-226 in combination with a target for the alpha-emitter, such target conventionally being beryllium as seen in US4829191. The alpha-emitter and beryllium produces neutrons in an (alpha, n)-reaction.

Another type of external source widely used is a so-called secondary source of neutrons which undergoes irradiation to produce neutrons. A first material is irradiated by fission neutrons and decays by emitting gamma-rays to produce a neutron from a second material in $(\gamma,n)$ reaction (a photoneutron reaction). An example is where Sb-124 is the gamma emitter and 9-Be is the target that produces neutrons. This Sb-Be source produces nearly monoenergetic neutrons with the dominant peak at 24keV. One safety issue with the Sb-Be source is a high ratio of gamma-rays to neutrons.

These conventional neutron sources must be installed before the startup and un-installed after they have served the purpose of securing a sufficient neutron strength during startup. If not un-installed, the alpha-emitter part of the neutron source, for example Pu-238 will be prone to neutron capture from the operational reactor that now produces thermal neutrons. The neutron capture transmutes the isotope such as Pu-238 and degrades its usefulness as an alpha-emitter and the lifetime of the expensive external neutron source is lowered. Also, such $(\alpha,n)$ sources contain transuranic elements for example americium which can be converted into fissile isotope 242mAm. These sources are not appropriate for a commercial use.

Most of the above alpha-emitter/target sources have alpha-emitters with a long half-life Pu-238 (87 years), Am-241 (432 years), Ra-226 (1600 years) and they may be re-used as external sources for other reactors during their lifetime.

The "MSRE NEUTRON SOURCE REQUIREMENTS ORNL-TM-0935 (1964)" by J. R. Engel, P. N. Haubenreich, B. E. Prince, describes the conditions that exists during a startup of the molten salt reactor experiment (MSRE).

The neutron source strengths were estimated, and it was concluded that an external source to supplement the naturally occurring inherent source was necessary.

The reasons for an adding an external source were e.g., the wish to have a reference count rate at practically well below criticality and furthermore, in the determination of the critical point and calibration of the control rods, it was convenient to be able to remove the major neutron source and observe the decay of the flux. The specific removable external neutron sources mentioned were Pu-Be or Sb-Be secondary sources.

## Summary of the invention

It was an object of the present invention to provide a neutron source for a method of operating an MSR, said neutron source having improved safety during transportation of the neutron source to and from the location of the MSR, both before and after use of the neutron source.

A further object of the present invention was to provide a neutron source with simplified labour of installation/un-installation, such as installation before the startup of an MSR and un-installation after completion of the startup of the MSR.

A further object of the present invention was to avoid a "blind" startup of an MSR.

A further object of the present invention was to provide an economical advantageous neutron source for an MSR.

In accordance with an aspect of the invention, there is provided a method of operating a molten salt reactor (MSR) comprising the steps of:

- providing an MSR comprising:

  - a reactor core
  - a molten salt selected from the group of salts having a composition comprising at least one fluoride salt and/or at least one chloride salt

- adding an alpha-emitter to the molten salt.

In accordance with a further aspect of the invention, there is provided a molten salt reactor (MSR) adapted to be operated with the method defined above, wherein the MSR reactor comprises means for adding an alpha-emitter to the molten salt.

## Detailed Description

The method of operating a molten salt reactor (MSR) comprises the steps of:

- providing an MSR comprising:

  - a reactor core
  - a molten salt selected from the group of salts having a composition comprising at least one fluoride salt and/or at least one chloride salt

- adding an alpha-emitter to the molten salt.

We find that the addition of an alpha emitter to the molten salt has numerous advantages.

The neutron source is an inherent neutron source because neutrons are produced in an (alpha, n)-reaction when the added alpha emitter meets a target such as the naturally occurring F-19 and/or Cl-37 already present in abundancy in the molten salt. The addition of the alpha-emitter into the salt ensures a homogenously distributed source throughout the salt compared to installing one or a few external sources aimed at the salt. The homogenously distributed source in the reactor core also helps avoiding hot spots where a higher power density exists due to a larger neutron flux. Alpha radiation has a short range which gives an advantage in the safety measures for a neutron source when comparing with external neutron sources, such as external neutron sources relying on spontaneous fission or gamma-rays. The short range makes the alpha radiation easier to shield from compared to other radiations. When there is a need to implement the method for an MSR then there is only a need to transport the alpha-emitter to the MSR. This is to be compared with the situation where a conventional neutron source is used such as Cf-252 that produces neutrons before instalment, during un-instalment and during transport to/from the MSR in connection with a startup method. The neutron emission is in general considered far more complicated than alpha emission when it comes to operation, assignment and shielding in all handling procedures and more safety measures must be taken for an external neutron source. The short range of alpha emission also means that the (alpha, n)-reactions that take place are physically nearby the alpha emitter and thus the neutrons are created inside the fuel where they are intended to be of used. Thus, the exploitation can be said to be approx. 100% compared to installing an external source where a certain percentage of the neutrons on an external source simply miss the target of the salt for example for a fuel salt. The flux of neutrons missing the target for an external source may induce nuclear reactions in constructional materials which is to be avoided. The use of the inherent source being directly in the salt will lower this damaging effect. The large exploitation degree means that the overall activity can be lowered for the inherent source to fulfil the purpose.

The instalment of the neutron source is also simplified compared to an external neutron source. The instalment involves an addition of a relatively small amount of the alpha-emitter to the molten fuel salt which is considered simpler than the handling of an external neutron source used for a method of operating an MSR in a start-up method of the MSR.

There is no un-instalment process of the neutron source as would be the case with an external neutron source because the half-life for the alpha-emitter is sufficiently short so that the alpha-emitter decays comparatively quickly compared to the duration time of a startup method for example, but on the other hand has a decay time long enough to allow for the method to complete. Any residual activity arising from the alpha-emitter will soon after a startup be masked by the activity arising from the normal operation of the MSR after startup.

The startup method is also more versatile than conventional startup methods because the neutron source strength may be chosen and amended during the duration of the startup method by several additions as needed of portions of the alpha-emitter to the molten fuel salt. The addition of another portion of the alpha-emitter to the molten fuel salt is comparably easier than an amendment in the source strength for an external neutron source that would most likely require an amendment in the instalment of the source, such as installing additional sources.

During startup of an MSR, the criticality is increased gradually as monitored by measuring the neutron count. In case of a failure during the startup, for example a fuel salt pump failure, the delayed neutrons formed in the fuel salt will not be transported out of the core and an unwanted neutron surge in the core can be expected. When using the startup method according to one embodiment of the invention, then the effect of such a surge can to some degree be diminished because a sufficient high neutron strength in the subcritical range is already ensured and the relative increase of the surge is masked by this high strength.

**Molten salt reactors (MSRs) and molten salts**

Molten salt reactors (MSRs) are based on obtaining criticality with a fissile material most often dissolved in a molten salt. When the MSR uses a fissile material dissolved in a molten salt, the salt is referred to as the fuel salt (or molten fuel salt). Another type of reactor also referred to as an MSR is the case where the fuel is a solid and a molten salt is used as a coolant salt for accommodating the temperature increase in the solid pebble fuel, most often a TRISO type fuel. The US8442182 describes such a reactor where a molten salt is used as coolant for a pebble fuel immersed in the coolant. A coolant salt is a salt that contains no fissile material.

The nuclear fission produces energetic neutrons typically at an energy range from 100 keV to 2 MeV. The probability of a fission event occurring depends on the neutron energy. In a so-called fast reactor, the unmoderated (fast) neutrons produced from the fission events interact directly with other nuclei. Thermal and epi-thermal nuclear fission reactors rely on moderators to first reduce the energy of the energetic neutrons of 100 keV to 2 MeV to thermal neutrons which are typically stated to be 0.025 eV which is the kinetic energy at ambient temperature. Such thermal neutrons have a higher probability of inducing a fission event for e.g., U-235 as a prominent example of a fissile material. To summarise, nuclear fission reactors can thus be operated by two different principles, namely fast reactors and thermal/epi-thermal reactors. In a fast reactor, the energetic neutrons interact directly with fissile material to produce energy, fission products and energetic neutrons. In thermal and epi-thermal reactors, the energetic neutrons produced by fission exchange energy with a moderator material such as graphite and eventually interact with fissile material to produce energy, fission products and more energetic neutrons.

When using a fuel salt, the fissile material is dissolved in the molten salt comprising carrier salts and the carrier salts are preferably fluoride- or chloride-based salts. Fluoride salts comprises F-19 which is the sole naturally occurring isotope for fluorine and has a low neutron capture probability. Fluoride salts are therefore especially suited for thermal MSRs with a tight neutron economy. This is especially true for thermal breeder reactors, however F-19 is not considered as a moderator.

Compared to fluorine, chlorine has two stable isotopes, Cl-35 76% and Cl-37 24 %. Both isotopes are heavier than F-19 and the interacting neutron thus needs about twice more collisions to slow down from fast neutrons of 2MeV to 1eV. It is thus possible to operate a fast chloride breeder reactor with the natural chlorine composition. The higher capture probability in the thermal neutron energy region practically disqualifies chlorides for application in the thermal spectrum. But chlorides may be considered for waste burners with a relaxed requirement to the neutron economy and can benefit from the chemical features of chlorine.

In one embodiment, the molten salt is a molten fuel salt.

In one embodiment, the fuel salt is a fluoride fuel salt.

In one embodiment, the fuel salt is a chloride fuel salt.

By the term fluoride fuel salt or chloride fuel salt is meant a fuel salt based on one or more fluoride compounds or chloride compounds, respectively forming a fuel salt composition.

In one embodiment, the fuel salt is a mixture of a fluoride fuel salt and a chloride fuel salt.

Preferably, the fuel salt compositions exhibit a high physio-chemical stability in a large temperature interval between the melting point and boiling point of the fuel salt composition.

In one embodiment, the molten fuel salt is having a composition selected from the group consisting of compositions comprising:

sodium fluoride + potassium fluoride + uranium fluoride;
lithium fluoride + thorium fluoride + plutonium fluoride;
lithium fluoride + thorium fluoride + uranium fluoride;
lithium fluoride + beryllium fluoride + uranium fluoride;
lithium fluoride + beryllium fluoride + uranium fluoride + thorium fluoride;
lithium fluoride + beryllium fluoride + uranium fluoride + thorium fluoride + zirconium fluoride;
sodium fluoride + rubidium fluoride + uranium fluoride;
sodium fluoride + beryllium fluoride + uranium fluoride + thorium fluoride + zirconium fluoride;
potassium chloride + plutonium chloride + uranium chloride;
sodium chloride + plutonium chloride;
sodium chloride + plutonium chloride + uranium chloride.

In one embodiment, the molten fuel salt comprises U-235 compounds.

The fuel salt comprising U-235 may be of various enrichment levels such as SEU (<2% U-235), LEU (typically 3-5% U-235), HALEU (5-20% U-235) or even in a grade of naturally occurring uranium.

In one embodiment, the fuel salt does not comprise U-233.

In one embodiment, the molten fuel salt comprises Th-232.

When using Th-232 for a nuclear fission reactor, the fertile Th-232 is transmuted into the fissile U-233 forming a major part of the fuel for an MSR based on using the Th-232 fuel cycle. The Th-232 requires a surplus of neutrons to produce the U-233:

$$\overset{neutron}{n} + \,^{232}_{90}\text{Th} \longrightarrow \,^{233}_{90}\text{Th} \overset{\beta^-}{\longrightarrow} \,^{233}_{91}\text{Pa} \overset{\beta^-}{\longrightarrow} \overset{fuel}{\,^{233}_{92}\text{U}}$$

The neutron source for Th-232 is commonly provided by adding U-235 or U-233. The startup process is especially difficult for an MSR with a molten fuel salt comprising Th-232 because the intermediate Pa-233 is a significant neutron absorber and has a half-life of 27 days. The absorption by Pa-233 of the surplus of neutrons therefore halts the breeding of Th-232 into U-233 by deteriorating the neutron economy. One way to solve this problem for a startup method for an MSR with a molten fuel salt comprising Th-232 requires a continuous fuel processing to remove the formed Pa-233 and reintroduce the U-233 once formed. By using the method according to the invention, the fuel processing to remove Pa-233 is downplayed as a method to maintain sufficient neutrons because a sufficient neutron economy is assured for the breeding into U-233 can proceed.

In one embodiment, the method is a startup method of the MSR.

A startup method for a nuclear reactor must provide the result that the reactor obtains criticality so that a normal state of operation of the reactor can take place with a controlled nuclear fission chain reaction. The startup method must be safe, and no reactivity excursions should take place and it should also be possible to measure the neutron count and monitor the reactivity of the fission chain reaction during the whole startup until the normal operation has occurred.

In one embodiment, the method is a startup method of the MSR and the molten salt is a molten fuel salt, said molten fuel salt being a fresh molten fuel salt.

A fresh fuel salt is an unused fuel salt, thus a fresh fuel salt is a fuel salt that has not obtained criticality of the fissile constituents of the fuel salt, such as obtained criticality during an operation of a reactor comprising the fuel salt.

A fresh fuel salt is to be understood as the fuel salt before a startup method has been initiated, thus after addition of the fuel salt to the reactor but before for example control rod positions have been altered or an alpha-emitter has been added to the fuel salt.

The fuel salt may have some inherent neutron source strength as explained due to for example spontaneous fission events taking place in the fresh fuel salt.

In one embodiment, the fresh fuel has not before been subject to a startup method comprising the use of external or inherent neutron sources.

In one embodiment, the MSR comprises one or more control rods.

Preferably, the alpha-emitter is added to the fuel salt where the MSR is in a configuration with the control rods in the inserted position. Thereafter one awaits that the alpha-emitter has been thoroughly mixed with the fuel salt to ensure a sufficient homogeneity of the alpha emitter concentration, for example as deduced from a neutron flux measurement.

This is preferred to the opposite sequence of events, namely where one or more control rods are removed at least partly before addition of the alpha-emitter because any inhomogeneities of the alpha emitter may result in reactivity excursions being enhanced with one or more control rods removed.

In one embodiment, the molten salt is a molten coolant salt.

In one embodiment, the molten coolant salt is having a composition selected from the group consisting of compositions comprising:

sodium fluoride + aluminium fluoride;
lithium fluoride + beryllium fluoride + lithium fluoride;
lithium fluoride + sodium fluoride + potassium fluoride;
sodium fluoride + zirconium fluoride.

The sodium fluoride + aluminium fluoride is disclosed in e.g., WO2022/053396 and certain specific amounts of sodium fluoride and aluminium fluoride are also commonly referred to as cryolite.

The lithium fluoride + sodium fluoride + potassium fluoride is sometimes referred to as FLiBe.

In one embodiment, the method is a startup method of the MSR and the molten salt is a coolant salt, such as for an MSR comprising UOz-fuel.

The UOz-fuel may be comprised in a TRISO-fuel. An MSR using a molten salt as a coolant salt and UOz-fuel comprised in a TRISO-fuel is sometimes referred to as a molten salt cooled pebble bed reactor.

The inherent neutron source in TRISO-fuel is relatively small being similar when using UOz-fuel. It is therefore particularly advantageous to add an alpha-emitter to the coolant salt comprising fluoride- or chloride-salts and thereby increase the inherent neutron source strength. Preferably, the amount of alpha-emitter is kept at a level where it is ensured that there is a tolerable radiation in the cooling system being in contact with the coolant salt.

**The alpha-emitter**

The alpha-emitter plays part of the process of producing neutrons in the (alpha,n) - process where an alpha-particle reacts with a nuclide, for example the nuclide F-19:
$\alpha + \text{F-19} \rightarrow \text{Na-22} + n$.

The alpha-emitter may be an isotope where all or the majority of the radioactive decay energy is energy arising from alpha radiation.

It is not all of the many isotopes mapped in for example nuclide charts that are alpha-emitters. With a few exceptions, most alpha-emitters are isotopes of elements with an atomic number Z above 28 with a majority of alpha-emitters having an atomic number Z above 83.

In one embodiment, the alpha-emitter is an isotope that provides an alpha-emitter as a daughter nuclide.

In one embodiment, the alpha-emitter is selected from the group consisting of Ra-223, Ac-225, Th-227, Cm-242, Po-210.

The decay series of the preferred Ra-223 is listed below with the primary decay type and energy per nuclear transformation, abbreviated (nt).

| Nuclide | Half-life | Decay mode | Emitted energy (MeV nt$^{-1}$) | | | |
|---|---|---|---|---|---|---|
| | | | Alpha | Electron | Photon | Total |
| $^{223}$Ra | 11.4 d | Alpha | 5.7702 | 0.0781 | 0.1413 | 5.9895 |
| $^{219}$Rn | 3.96 s | Alpha | 6.8801 | 0.0068 | 0.0586 | 6.9456 |
| $^{215}$Po | 1.781E-3 s | Alpha | 7.5261 | <E-04 | 0.0002 | 7.5263 |
| $^{211}$Pb | 36.1 m | Beta | - | 0.4543 | 0.0644 | 0.5187 |

(continued)

| Nuclide | Half-life | Decay mode | Emitted energy (MeV nt$^{-1}$) | | | |
|---|---|---|---|---|---|---|
| | | | Alpha | Electron | Photon | Total |
| $^{211}$Bi | 2.14 m | Alpha/Beta | 6.6757 | 0.0100 | 0.0473 | 6.7330 |
| $^{207}$Tl (0.997) | 4.77 m | Beta | - | 0.4952 | 0.0024 | 0.4975 |
| $^{211}$Po (0.003) | 0.516 s | Alpha | 7.5860 | 0.0002 | 0.0082 | 7.5944 |
| $^{207}$Pb | | Stable | | | | |

Table taken from "Radiation safety considerations for the use of 223RaCl2 DE in men with castration-resistant prostate cancer", Lawrence T. Dauer et al, Health Phys. 2014 Apr; 106(4): 494-504.

It can be seen that although a few of the daughter products for example Pb-211 does not emit alpha-radiation but beta-radiation instead, the alpha-radiation is the dominant type of radiation.

In one embodiment, the alpha-emitter is a metal element alpha-emitter and the metal element alpha-emitter is added to the molten salt in a state selected from the group of a metallic state alpha-emitter, a metal compound alpha-emitter, a metal salt alpha-emitter, a metal salt alpha-emitter in an aqueous solution or dispersion.

When it is chosen to add a metallic state alpha-emitter then a very low volume is needed to be added to the molten salt. The lowest volume possible to be added can be achieved by adding the pure isotope such as for example adding 100% pure Ra-223. A metallic state alpha-emitter may also be alloyed with other metals or isotopes of the same metal as the alpha-emitter and still provide a very small volume to be added.

It is preferred to add the metal element alpha-emitter to the molten salt in a state of a metal compound alpha-emitter.

In one embodiment, the metal compound alpha-emitter is a metal ion associated with oxide ions.

In one embodiment, a metal element alpha-emitter is added to the molten salt in a state as a metal salt alpha-emitter.

The amounts of the anion of the metal salt will not influence the chemical composition of the molten salt to any large degree because it is present in the molten salt in a low concentration.

In one embodiment, the metal compound alpha-emitter such as the metal salt alpha-emitter is melted before addition to the molten salt.

In one embodiment, a metal element alpha-emitter is added to the molten salt in a state as a metal salt alpha-emitter in an aqueous solution or dispersion.

Several advantageous chloride salt compounds comprising an alpha emitter exist, for example $RaCl_2$ which is commercially available and aqueous solutions thereof are also known under the name Xofigo (or Alpharadin) for $^{223}RaCl_2$. These products for medical use are typically provided as a vial with a volume of 6 ml, corresponding to 6 MBq as of the reference date. The vials are stored in lead containers and used within 28 days of shelf-life, cf. Dauer et al. above.

The addition of an aqueous solution or dispersion of the metal salt alpha-emitter to the molten fuel salt has the advantage that the alpha-emitter is easily distributed in the molten salt. This is especially an advantage when the melting point of metal salt alpha-emitter is higher or in the vicinity of the temperature of the molten fuel salt.

In one embodiment, the metal salt alpha-emitter is a chloride or bromide compound, preferably in aqueous solution.

The general trend among the halogen salts regarding the aqueous solubility is that chloride or bromide salts have higher solubilities than the corresponding fluoride metal salt with the same cation.

In one embodiment, the salt compound comprises crystal water, such as $ThCl_4(H_2O)_n$, n=4.

The addition of the alpha-emitter as a metal salt alpha-emitter in its solid state is advantageously done when the melting temperature of the metal salt alpha-emitter is lower than the temperature of the molten salt. The metal salt alpha-emitter will thereby melt and distribute easily in the molten salt.

In one embodiment, the alpha-emitter is a metal salt alpha-emitter of a chloride salt or a bromide salt in a solid state. Most chloride or bromide metal salts have lower melting points than the corresponding fluoride metal salt with the same cation.

| Isotope | Main fluoride salt | half-life of isotope | melting point |
|---|---|---|---|
| Ra-223 | $RaF_2$ | 11.43 d | 900 °C for $RaCl_2$. |
| Th-227 | $ThF_4$ | 18.68 d | 1110 °C for $ThF_4$. |

(continued)

| Isotope | Main fluoride salt | half-life of isotope | melting point |
|---------|-------------------|---------------------|---------------|
| | $ThF_6$ | | 770 °C for $ThCl_4$. |
| Cm-242 | $CmF_3$ | 160 d | 695 °C for $CmCl_3$<br>1406 °C for $CmF_3$ |
| Po-210 | - | 138 d | 355 °C for $PoCl_2$ |
| Ac-225 | $AcF_3$ | 9.9 d | - |

In one embodiment, the metal element alpha-emitter is present in the metal salt alpha-emitter in 0.001-10 at.%, such as 0.01-5 at.% of the metal part of the metal salt alpha-emitter.

In one embodiment, the metal element alpha-emitter is present in the metal salt alpha-emitter in 0.001-10 at.%, such as 0.01-5 at.% of the metal part of the metal salt alpha-emitter, the remaining metal part being a non-active metal element, preferably being a non-active isotope of the same metal element as the metal element alpha-emitter.

The above embodiments have the advantage that the activity is lower than for the metal salt alpha-emitter with all of the metal part being constituted by the active alpha-emitter. The lower activity is advantageous during production of the metal salt alpha-emitter, and it may furthermore be easier to produce the metal part of the metal salt alpha-emitter. Also, if the alpha-emitting activity is too high in the metal salt alpha-emitter then an unwanted high neutron production may occur through an (alpha, n)-reaction between the alpha-emitter and the anion of the metal salt alpha-emitter, such as a chloride or fluoride anion.

The metal salt alpha-emitter may be an organic salt or an inorganic salt.

In one embodiment, the molten salt comprises at least one fluoride salt and the amount of the added alpha-emitter being from 0.01 to 10 MBq per ml of molten salt volume, such as from 0.05 to 1 MBq per ml of molten salt volume, such as from 0.1 to 0.7 MBq per ml of molten salt volume said molten salt comprising from 30 to 80 atomic percentage F-19, or

the molten salt comprises at least one chloride salt and the amount of the alpha-emitter being from 0.01 to 10 MBq per ml of molten salt volume, such as from 0.05 to 1 MBq per ml of molten salt volume, such as from 0.1 to 0.7 MBq per ml of molten salt volume, said molten salt comprising from 5 to 20 atomic percentage Cl-37.

In one embodiment, the above amounts of the added alpha-emitter are for a startup method of the MSR and the molten salt is a molten fuel salt, said molten fuel salt being a fresh molten fuel salt.

In one embodiment, the molten salt comprises at least one fluoride salt and the amount of the Ra-223 is from 0.005 to 5 ng per ml of molten salt volume, such as from 0.025 to 0.5 ng per ml of molten salt volume, such as from 0.05 to 0.3 ng per ml of molten salt volume, said fuel salt comprising from 30 to 80 atomic percentage F-19.

In one embodiment, the above amounts of the added Ra-223 are for a startup method of the MSR and the molten salt is a molten fuel salt, said molten fuel salt being a fresh molten fuel salt.

In one embodiment, the molten salt comprises at least one fluoride salt and the amount of the added alpha-emitter being from 0.001 to 1 MBq per ml of molten salt volume, such as from 0.005 to 0.1 MBq per ml of molten salt volume, such as from 0.01 to 0.07 MBq per ml of molten salt volume said molten salt comprising from 30 to 80 atomic percentage F-19.

In one embodiment, the above amounts of the added alpha-emitter are for a startup method of the MSR and the molten salt is a coolant salt, preferably a coolant salt having a composition of sodium fluoride + aluminium fluoride.

The amounts of the added alpha-emitter may be lower for a coolant salt, especially for a coolant salt having a composition of sodium fluoride + aluminium fluoride. In order to fulfil the requirements of a safe startup with approximately 0.1n/s per ml and for a few $m^3$ of coolant salt it would be possible to add the alpha-emitter in a relatively small addition volume having approximately 1 MBq per ml. This makes it possible to utilise commercial products such as Xofigo having 1.1 MBq per ml as an aqueous solution of a metal salt alpha-emitter.

In one embodiment, the amount of the alpha-emitter is on the order of $10^{-6}$ or less of the total amount of fuel salt, based on weight.

It has surprisingly been found that the amount of the alpha-emitter needed to be added to provide an increase in the source strength of at least one order of magnitude is very low.

In one embodiment, the alpha-emitter is comprised in an aqueous solution or dispersion.

The volume of the aqueous solution or dispersion which is to be added is small compared to the total volume of the molten salt. In one embodiment, the volume of an aqueous solution or dispersion of the alpha-emitter is 0.5 to 200 l, such as 2 to 100 l.

Molten fuel salt volumes in an MSR are typically of the order of 1 $m^3$ or more for an MSR producing several MW thermal energy, such as at least 10 MW. Hence, the volume of an added solution or dispersion of the alpha-emitter is very small compared to the fuel salt volume, such as a ratio of between $1:10^6$ to $1:10^3$, such as between $1:10^5$ to $5:10^3$.

The need to only add a small volume of the alpha-emitter including any carrier volume in for example liquid form is an advantage. The dimensions of any inlets used in a method of adding the alpha-emitter can be small compared to the dimensions of the molten fuel salt tubing or container or other means of containing the molten fuel salt and the duration time of adding the alpha-emitter may be short such as less than 60 minutes, such as less than 10 minutes.

In one embodiment, the alpha-emitter has a half-life in the interval of 6-200 days, such as 8-100 days, such as 9-60 days.

## Addition of the alpha-emitter

The alpha-emitter may be part of a chemical compound and be added in a solid state, a gaseous state, a liquid state or as an aqueous solution or dispersion at prevailing temperature and pressure.

In one embodiment, a metal compound alpha-emitter is added in a gaseous state, a liquid state or as an aqueous dispersion or solution and added through a sparger into the molten salt. A sparging process using a sparger as above has the advantage to distribute the alpha-emitter evenly into the molten salt.

In one embodiment, the MSR comprises a molten fuel salt loop.

In one embodiment, the MSR comprises a molten salt loop and the addition of the alpha-emitter is made to the molten salt, preferably at one or more locations of the molten salt loop.

An MSR with a molten fuel salt loop provide means for circulating the molten salt in the loop. The fission reaction takes place in the core of the reactor and thereafter the heat energy acquired from the fission reaction in the molten fuel salt can be transported out of the core in the molten salt and be subject for a heat exchange at another point of the salt loop.

The molten fuel salt loop may comprise and inlet and an outlet of the molten fuel salt to the reactor core.

In one embodiment, the addition of the alpha-emitter is done downstream, after the outlet of the fuel salt from the reactor core and into an inlet on the fuel salt loop.

By adding the alpha-emitter at the above location, a sufficient homogenous distribution of the alpha emitter into the fuel salt is allowed to take place because the added alpha-emitter travel a major part of the total loop length before it re-enters the reactor core and thereby for a sufficient time for mixing of the alpha-emitter into the fuel salt.

In one embodiment, the addition of the alpha-emitter is made to a molten fuel salt, where the molten fuel salt is contained in at least one fuel tube, said at least one fuel tube encloses the molten fuel salt.

In one embodiment, the addition of the alpha-emitter is made to a fuel salt, where the fuel salt is contained in at least one fuel tube, said at least one fuel tube encloses the fuel salt.

In one embodiment, the addition of the alpha-emitter is made to a molten fuel salt pool and the alpha-emitter is mixed in the pool, wherein the content of the pool is added to the molten salt of the MSR.

When the alpha-emitter is added to a salt pool as described above, it is preferred that the alpha-emitter is a metal element alpha-emitter and preferably added to the molten salt in a state of a metal compound alpha-emitter, such as a metal salt alpha-emitter, or as a metallic state alpha-emitter.

The pool is preferably a pool separate from the molten salt volume of the MSR and of smaller molten salt volume than the molten salt volume of the MSR.

The addition of the alpha-emitter into a molten salt in a pool has the advantage that a homogenised mixture can be assured before addition to the molten salt of the MSR. Also, when the alpha-emitter is provided as a sample with high activity, such as >1 GBq/ml of sample volume then it is advantageous to dilute the activity to a lower activity before adding the alpha-emitter to the MSR molten salt. Such a dilution of the activity will help in avoiding power excursions that could arise if high activity alpha-emitters not properly mixed entered the MSR core.

In one embodiment, the pool is a reactor drain tank or a part of a fuel storage system.

In one embodiment, several additions of the alpha-emitter take place to the molten salt. Thus, the method step of adding an alpha-emitter to the molten salt may be carried out more than one time during operation of the MSR, such as during startup of the MSR.

The addition of the total amount of the alpha-emitter in the startup method into several portions enables an improved control of the activity because the neutron flux can be detected and followed in steps separated in time to allow adjustments. Such adjustments may be an adjustment of the flow rate of the fuel salt or an adjustment of the position of one or more of the control rods.

In one embodiment, the addition of the alpha-emitter is made as an injection of a compound of the alpha-emitter to the molten salt, said injection being selected from: an injection of a gas comprising the alpha-emitter, an injection of a liquid comprising the alpha-emitter, an injection of an aqueous solution or dispersion comprising the alpha-emitter.

Preferably, the injection is carried out under pressure. The pressure is in the interval of 0.1-1 bar, such as 0.2 to 0.5 bar. The provision of a pressure for the injection ensures a fast addition of the alpha-emitter to the fuel salt.

In one embodiment, the metal compound alpha-emitter is added in an aqueous solution or dispersion.

In one embodiment, the MSR comprises a corrosion control system and the addition of the alpha-emitter in an aqueous solution or dispersion is made by adding the solution or dispersion to a corrosion control system. The MSR may comprise a molten fuel salt loop comprising a tubing material and a corrosion control system for providing corrosion control of the tubing material and/or the material of the reactor vessel where the reactor core is situated. Corrosion control comprises adding a redox-element having a reduction potential, which is larger than that of the inner tubing material and/or a redox-element which controls the oxoacidity of the molten fuel salt. Such a method is described in WO2018/229265. The oxoacidity of molten fluoride salts is sometimes referred to as fluoroacidity. The specific redox-element may be chosen from $H_2O$, $H_2$, and HF and the redox-element may be added to the fuel salt through a redox-element inlet comprised in the corrosion control system. The alpha-emitter may be added to the redox-element inlet, preferably an aqueous solution or dispersion comprising the alpha-emitter is added through the redox-element inlet.

Preferably, the addition of the alpha-emitter in an aqueous solution or dispersion is made by adding the solution or dispersion to a sparger being part of a corrosion control system.

In one embodiment, the MSR comprises an off-gas system and the addition of the alpha-emitter in an aqueous solution or dispersion is made to an off-gas system, such as to a cover gas forming part of the off-gas system.

Some MSR designs comprise an off-gas systems to alleviate the gasses developed during the fission process, most prominently the Kr and Xe isotopes from the fission of U-235.

In one embodiment, the alpha-emitter is added to the salt composition and the salt composition is thereafter melted.

In one embodiment, the MSR further comprises a moderator based on a material selected from a graphite material and/or a molten salt of a metal hydroxide.

Other moderators used may be water, deuterated water ($D_2O$), Be-compounds or hydrides such as zirconium hydrides.

In one embodiment, the MSR is located on a marine structure, preferably a barge.

The marine structure may be a barge that comprises a power generation structure comprising one or more MSRs and steam turbines that can generate electricity. A startup method according to the invention is especially suited for a safe startup for many smaller reactors such as MSRs compared to one large reactor providing the same power output as the many small MSRs. The above-mentioned advantages for example the costs, the easy instalment and no need for un-instalment of a neutron source during the startup method is particular advantageous in this case of many reactors. Also, since the barge may be situated at a remote location the transportation is made easier for a relatively small amount of an alpha-emitter than for a conventional neutron source which implies safety measures such as shielding for transporting such a high activity gamma emission. These advantages add up when doing a startup method for a whole fleet of power generation barges.

In accordance with an aspect of the invention, there is provided a molten salt reactor (MSR) adapted to be operated with the method defined above, wherein the MSR reactor comprises means for adding an alpha-emitter to the molten salt.

In one embodiment, a molten salt reactor (MSR) adapted to be operated with the method defined above, comprises means for adding an alpha-emitter to the molten salt, said means being a sparger in communication with the molten salt, said sparger being in communication with a reservoir for a metal compound alpha-emitter in a gaseous state, a liquid state or as an aqueous dispersion or solution.

In one embodiment, a molten salt reactor (MSR) adapted to be operated with the method defined above, comprises means for adding an alpha-emitter to the molten salt, said means being one or more inlets to locations of a molten fuel salt loop.

An MSR with a molten fuel salt loop provide means for circulating the molten salt in the loop. The fission reaction takes place in the core of the reactor and thereafter the heat energy acquired from the fission reaction in the molten fuel salt can be transported out of the core in the molten salt and be subject for a heat exchange at another point of the salt loop.

In one embodiment, a molten salt reactor (MSR) adapted to be operated with the method defined above, comprises means for adding an alpha-emitter to the molten salt, said means being an inlet to at least one fuel tube, said at least one fuel tube enclosing a molten fuel salt.

In one embodiment, a molten salt reactor (MSR) adapted to be operated with the method defined above, comprises means for adding an alpha-emitter to the molten salt, said means being an inlet to a molten fuel salt pool in communication with the molten salt, wherein the MSR comprises means for mixing the alpha-emitter in the pool.

In one embodiment, a molten salt reactor (MSR) adapted to be operated with the method defined above, comprises means for adding an alpha-emitter to the molten salt, said means being an inlet to a corrosion control system.

The MSR may comprise a molten fuel salt loop comprising a tubing material and a corrosion control system for providing corrosion control of the tubing material and/or the material of the reactor vessel where the reactor core is situated.

In one embodiment, a molten salt reactor (MSR) adapted to be operated with the method defined above, comprises means for adding an alpha-emitter to the molten salt, said means being an inlet to an off-gas system.

In accordance with an aspect of the invention, there is provided a use of an alpha-emitter for operating a molten salt reactor (MSR) comprising a molten fuel salt selected from the group of a molten fluoride fuel salt and/or a molten chloride fuel salt, wherein the alpha-emitter is added to the molten fuel salt comprised in the MSR.

In one embodiment, there is provided a use of an alpha-emitter for a startup of a molten salt reactor (MSR) comprising a molten fuel salt selected from the group of a molten fluoride fuel salt and/or a molten chloride fuel salt, wherein the alpha-emitter is added to the molten fuel salt comprised in the MSR.

In one embodiment, one or more control rods are removed from the reactor core. In one embodiment, one or more neutron flux detectors are detecting the neutron flux.

**Brief description of the drawings**

In the following the invention will be explained in greater detail with the aid of examples and with reference to the schematic drawings, in which:

Fig. 1 shows the total neutron emission rate (the source strength) in neutrons/s/ml, shown as an energy spectrum together the contributions to the total rate from (alpha,n)-reactions between F-19 + alpha from U-234 and Na-23 + alpha from U-234;

Fig. 2 illustrates the neutron source strength due to the addition of Ra-223 plotted vs. volumetric activity, MBq/ml fuel salt for a fluoride based salt and a chloride based salt;

Fig. 3 illustrates the neutron source strength due to the addition of Ra-223 plotted vs. mass per volume, g/ml fuel salt for a fluoride based salt and a chloride based salt;

Fig. 4 illustrates the neutron source strength due to the addition of Ra-223 plotted vs. volumetric activity, MBq/ml for a coolant salt;

Fig. 5 illustrates the neutron source strength due to the addition of Ra-223 plotted vs. mass per volume, g/ml for a coolant salt.

The invention is not limited to the embodiment/s illustrated in the drawings. Accordingly, it should be understood that where features mentioned in the appended claims are followed by reference signs, such signs are included solely for the purpose of enhancing the intelligibility of the claims and are in no way limiting on the scope of the claims.

The term "comprising" as used in this specification and claims means "consisting at least in part of". When interpreting statements in this specification and claims which include the term "comprising", other features besides the features prefaced by this term in each statement can also be present. Related terms such as "comprise" and "comprised" are to be interpreted in a similar man er.

**Detailed Description**

**Inherent source strength for a fresh fuel, no added alpha-emitter**

The inherent source strength (the normalized neutron emission rates in neutrons/s/ml) was calculated for a fresh fuel of the composition:

sodium fluoride + potassium fluoride + uranium fluoride, sometimes termed "FUNaK" after the element constitution of F (fluoride), U (uranium), Na (sodium) and K (potassium).

The SOURCES4C code was used to estimate the neutron emission rate which is a code capable of estimating neutron sources due to $(\alpha,n)$, spontaneous fission and delayed neutron emission, see:

W. B. Wilson, R. T. Perry, E. F. Shores, W. S. Charlton, T. A. Parish, G. P. Estes, T. H. Brown, E. D. Arthur, M. Bozoian, T. R. England, D. G. Madland, and J. E. Stewart. SOURCES 4C: A Code for Calculating (a,n), Spontaneous Fission, and Delayed Neutron Sources and Spectra, LA-UR-02-1839. Technical report, Los Alamos National Laboratory, 2002.

The estimate includes only (o,n) and spontaneous fission sources. Photoneutrons (ie. neutrons resulting from $(\gamma,n)$ reactions) are ignored.

The study ignores that some $\alpha$-particles might leak from the fuel instead of contributing to neutron production, but this is a negligible fraction of the $\alpha$-particles.

When considering fresh fuel, aging effects (i.e. the presence of daughter products of uranium isotopes due to long storage) were ignored.

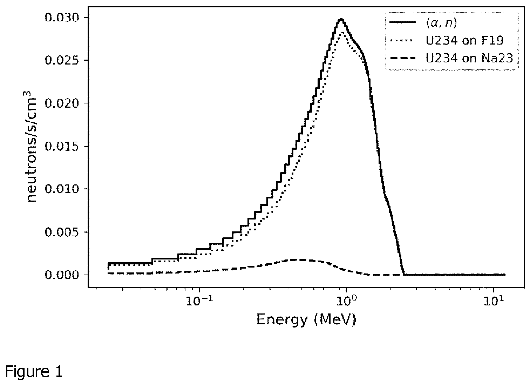

The results are shown as normalized neutron emission rates in neutrons/s/ml and shown as a spectrum in Fig. 1.

Fig 1 summarizes the results for fresh fuel salt and illustrates that the major contribution is from $\alpha$-particles originating from U-234 and interacting with the F-19 nuclei. These results verify the result that U-234 is a significant contributor to the inherent neutron source and must be taken into account.

It was also found that the spontaneous fission source rate contributes only approx. 1.5% of neutrons (not included in Fig. 1).

**Example 1**

**Inherent source strength for two fresh fuel salts added with Ra-223**

The inherent source strengths were calculated in this example for two fresh fuel salts each added with various amounts of the alpha-emitter Ra-223.

**Fluoride based salt**

The inherent source strength (the normalized neutron emission rates in neutrons/s/ml) was calculated for a fresh fuel of the composition:
Sodium fluoride + potassium fluoride + uranium fluoride, sometimes termed "FUNaK" after the element constitution of F (fluoride), U (uranium), Na (sodium) and K (potassium).
The specific composition of the fresh FUNaK fuel salt was:

| Isotope | Atomic fraction |
| --- | --- |
| F-19 | 0.647887324 |
| Na-23 | 0.177816901 |
| K-39 | 0.070600322 |
| K-40 | 8.86E-06 |
| K-41 | 0.005095046 |
| U-234 | 0.00013162 |
| U-235 | 0.014788732 |
| U-238 | 0.083671197 |

**Chloride based salt**

The inherent source strength (the normalized neutron emission rates in neutrons/s/ml) was calculated for a fresh fuel of the composition:
Sodium chloride + uranium chloride, here referred to as "ClUNa" after the element constitution of Cl (chloride), U (uranium), Na (sodium) with 3 UCl3 + 3.65 NaCl, thus an atomic fraction of:

| Isotope | Atomic fraction |
| --- | --- |
| Cl-35+ Cl-37 | 0.655440415 |
| Cl-37 | 0.157305699 |

Firstly, the inherent source strengths for fresh fuels of FuNaK and ClUNa were calculated.

FUNaK

The total source rate for fresh FUNaK salt is found to be 1.57 neutrons/sec/ml.
In the case of a total fuel volume of the reactor core of 5 $m^3$, this amounts to a total neutron emission of $8*10^6$ n/s. For an active core volume of 0.708 $m^3$, the total neutron emission is $10^6$ n/s.
Upon evaluating the simplified Hansen's criterion ("Assembly of Fissionable Material in the Presence of a Weak Neutron Source", G. E. Hansen, Pages 709-719, 13 May 2017 it is observed that the inherent source can be considered to be stochastically safe, since SΛ>1, therefore fluctuations in the number of neutrons are negligible, and the core can be safely started up.

SOURCES4C input explained

The input file for SOURCES4C is explained and shown below for the case of the FUNaK salt.

Line 1 contains the title of the input file. Line 2 describes the problem, the three parameters indicate that it is a homogeneous problem (parameter=1), both the source magnitudes and the spectra needs to be printed (parameter=2), and the histogram structure of the spectra is ascending (parameter=1). In Line 3, the parameter 4 indicates the number of elements in the problem for which stopping powers are to be considered and parameter 0 indicates that solid type stopping cross sections are to be used. Line 4a-4d list the elements included with there atomic number and atomic fraction. Line 5 describes the requested histogram parameters: 500 bins between 0.0 and 12.0 MeV. Since 500 is a positive integer, the code will determine the group structure with linear interpolation instead of a user defined group structure, which would require a negative integer and then a list of energy bin boundaries. Line 6 states the number of source nuclides (ie. Alpha-emitter nuclides and/or nuclides capable of spontaneous fission), in this case 3. Line 7a-7c lists the three source nuclides with a ZAID (specified by the SOURCES4C manual as ZAID=10000Z+A+state, where the state is either 0 or 1 for ground and metastable, respectively) and their number densities. Line 8 gives the number of target nuclides (ie. nuclides with (o,n) cross sections), in this case two, and specifies the number of $\alpha$-particle energy groups to be used in the calculations, in this case 4000. Finally, Line 9a-9b lists the target nuclides with there ZAID and atomic fractions.

| Line1 | Fresh molten salt |
|---|---|
| line2 | 1 2 1 |
| line3 | 4 0 |
| line4a | 9 0.6478873239 |
| line4b | 11 0.1778169014 |
| line4c | 19 0.0757042254 |
| line4d | 92 0.0985915493 |
| line5 | 500 12.00 0.00 |
| line6 | 3 |
| line7a | 922350 8.651556e+20 |
| line7b | 922380 4.894848e+21 |
| line7c | 922340 7.699884e+18 |
| line8 | 2 4000 |
| line9a | 090190 6.478873e-01 |
| line9b | 110230 1.778169e-01 |

Secondly, the inherent source strengths for the fresh fuels of FuNaK and ClUNa added with the alpha-emitter Ra-223, were calculated.

Again, as above for the calculation for the fresh fuel salt, the SOURCES4C code was used to estimate the neutron emission rate.

A few changes to the input file for SOURCES4C were made such as input lines stating the amount of Ra-223 and the calculation of the neutron emission rate was made for a range of different values of the atomic density of the added Ra-223.

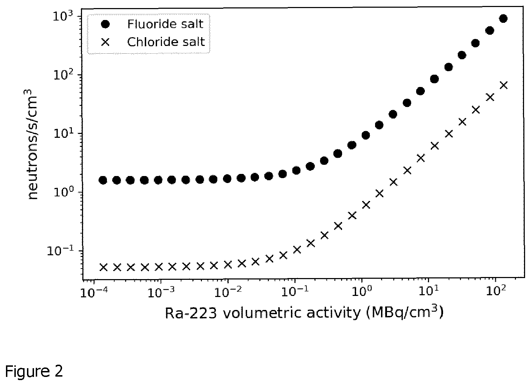

Fig. 2 illustrates the neutron source strength due to the addition of Ra-223 plotted vs. volumetric activity, MBq/ml fuel salt for the fluoride based salt and the chloride based salt.

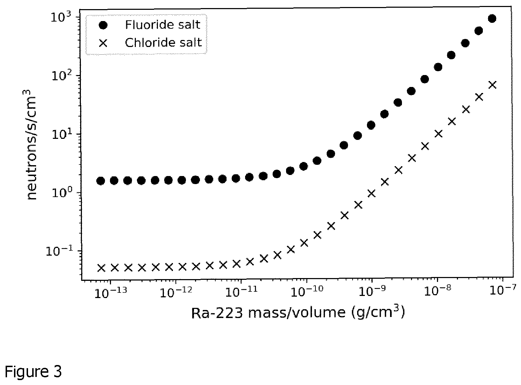

Fig. 3 illustrates the neutron source strength due to the addition of Ra-223 plotted vs. mass per volume, g/ml fuel salt for the fluoride based salt and the chloride based salt.

FUNaK

It is seen for example from Fig. 3 that adding 0.1ng of Ra-223 per ml salt volume would result in approx. 2 orders of magnitude increase in the source strength for the fluoride based salt.

For the purpose of obtaining a startup which is not blind for an MSR with the fluoride based salt, it is estimated that an increase in the source strength of 2-3x would be needed compared to a fresh salt without added Ra-223.

The neutron flux detectors are installed on the side of the reactor vessel to detect the flux increase as criticality is approached.

The addition of a range of amounts of the Ra-223 in this example results in a magnitude of the neutron flux which is sufficient to enable that the startup of the MSR is not a blind startup. As already mentioned above for the fluoride based salt (FUNaK), the startup had been evaluated to be a safe startup based on the Hansen criterium.

As the time progresses during the startup, the reactivity obtains the wanted value and thereafter the decay of Ra-223 results in an increasingly lower contribution to the inherent source strength.

ClUNa

It is also seen from Fig. 3 that adding approx. 0.1ng of Ra-223 per ml salt volume results in a source strength of approx. 0.1 n/s per ml for the chloride based salt.

For the purpose of obtaining a safe startup for an MSR with the chloride based salt, it is estimated that a source strength of 0.1 n/s per ml fuel salt would be needed.

The neutron flux detectors are installed on the side of the reactor vessel to detect the flux increase as criticality is approached.

The addition of a range of amounts of Ra-223 in this example results in a magnitude of the neutron flux which is sufficient to enable a safe startup of the MSR.

As the time progresses during the startup, the reactivity obtains the wanted value and thereafter the decay of Ra-223 results in a an increasingly lower contribution to the inherent source strength.

**Example 2**

**Inherent source strength for a coolant salt added with Ra-223**

The inherent source strength was calculated in this example for a coolant salt (no fissile material) added with various amounts of the alpha-emitter Ra-223.

Fluoride based salt

The inherent source strength (the normalized neutron emission rates in neutrons/s/ml) was calculated for a coolant salt of the composition:
Sodium fluoride + aluminium fluoride, AIF3-NaF.

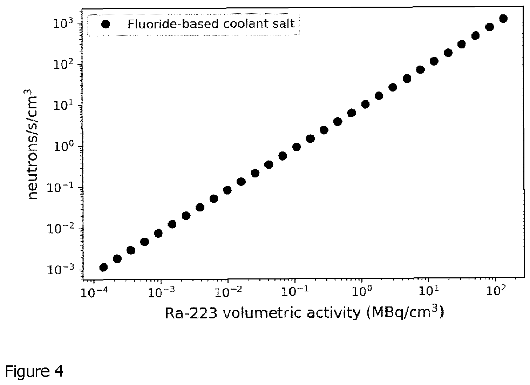

Fig. 4 illustrates the neutron source strength due to the addition of Ra-223 plotted vs. volumetric activity, MBq/ml coolant salt.

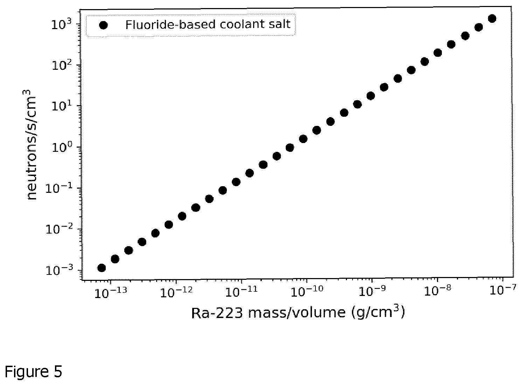

Fig. 5 illustrates the neutron source strength due to the addition of Ra-223 plotted vs. mass per volume, g/ml coolant salt.

It is seen from Fig. 5 that adding approx. 0.01ng of Ra-223 per ml salt volume results in a source strength of approx. 0.1 n/s per ml for the coolant salt.

For the purpose of obtaining a safe startup for an MSR, it is estimated that a source strength of 0.1 n/s per ml coolant salt would be needed.

The neutron flux detectors are installed on the side of the reactor vessel to detect the flux increase as criticality is approached.

The addition of a range of amounts of Ra-223 in this example results in a magnitude of the neutron flux which is sufficient to enable a safe startup of the MSR.

As the time progresses during the startup, the reactivity obtains the wanted value and thereafter the decay of Ra-223 results in an increasingly lower contribution to the inherent source strength.

**Claims**

1. A method of operating a molten salt reactor (MSR) comprising the steps of:

- providing an MSR comprising:

- a reactor core
- a molten salt selected from the group of salts having a composition comprising at least one fluoride salt and/or at least one chloride salt

- adding an alpha-emitter to the molten salt.

2. The method according to claim 1, wherein

the molten salt comprises at least one fluoride salt and the amount of the added alpha-emitter being from 0.01 to 10 MBq per ml of molten salt volume, such as from 0.05 to 1 MBq per ml of molten salt volume, such as from 0.1 to 0.7 MBq per ml of molten salt volume said molten salt comprising from 30 to 80 atomic percentage F-19, or the molten salt comprises at least one chloride salt and the amount of the alpha-emitter being from 0.01 to 10 MBq per ml of molten salt volume, such as from 0.05 to 1 MBq per ml of molten salt volume, such as from 0.1 to 0.7 MBq per ml of molten salt volume, said molten salt comprising from 5 to 20 atomic percentage Cl-37.

3. The method according to any one of the above claims, wherein
the alpha-emitter is selected from the group consisting of Ra-223, Ac-225, Th-227, Cm-242, Po-210.

4. The method of claim 3, wherein
the salt comprises at least one fluoride salt and the amount of the Ra-223 is from 0.005 to 5 ng per ml of molten salt volume, such as from 0.025 to 0.5 ng per ml of molten salt volume, such as from 0.05 to 0.3 ng per ml of molten salt volume, said fuel salt comprising from 30 to 80 atomic percentage F-19.

5. The method according to any one of the above claims, wherein
the alpha-emitter has a half-life in the interval of 6-200 days, such as 8-100 days, such as 9-60 days.

6. The method according to any one of the above claims, wherein the alpha-emitter is a metal element alpha-emitter and the metal element alpha-emitter is added to the molten salt as a metal element alpha-emitter selected from the group of a metallic state alpha-emitter, a metal compound alpha-emitter, a metal salt alpha-emitter, a metal salt alpha-emitter in an aqueous solution or dispersion.

7. The method according to any one of the above claims, wherein the molten salt is a molten fuel salt.

8. The method according to claim 7, wherein
the molten fuel salt is having a composition selected from the group consisting of compositions comprising:

sodium fluoride + potassium fluoride + uranium fluoride;
lithium fluoride + thorium fluoride + plutonium fluoride;
lithium fluoride + thorium fluoride + uranium fluoride;
lithium fluoride + beryllium fluoride + uranium fluoride;
lithium fluoride + beryllium fluoride + uranium fluoride + thorium fluoride;
lithium fluoride + beryllium fluoride + uranium fluoride + thorium fluoride + zirconium fluoride;
sodium fluoride + rubidium fluoride + uranium fluoride;
sodium fluoride + beryllium fluoride + uranium fluoride + thorium fluoride + zirconium fluoride;
potassium chloride + plutonium chloride + uranium chloride;
sodium chloride + plutonium chloride;
sodium chloride + plutonium chloride + uranium chloride;

9. The method according to any one of the above claims, wherein
the molten salt is a molten fuel salt, said molten fuel salt comprising U-235 compounds.

10. The method according to any one of the claims 1 to 6, wherein the molten salt is a molten coolant salt.

11. The method according to claim 10, wherein
the molten coolant salt is having a composition selected from the group consisting of compositions comprising:

sodium fluoride + aluminium fluoride;
lithium fluoride + beryllium fluoride + lithium fluoride;
lithium fluoride + sodium fluoride + potassium fluoride;
sodium fluoride + zirconium fluoride.

12. The method according to any one of the above claims, wherein
the method is a startup method of the MSR and the molten salt is a molten fuel salt, said molten fuel salt being a fresh molten fuel salt.

13. The method according to any one of claims 1 to 11, wherein

the method is a startup method of the MSR and the molten salt is a coolant salt.

14. The method according to any one of the above claims, wherein the MSR comprises a molten salt loop and the addition of the alpha-emitter is made to the molten salt, preferably at one or more locations of the molten salt loop.

15. The method according to any one of the above claims, wherein the addition of the alpha-emitter is made as an injection of the alpha-emitter to the molten salt, said injection being selected from: an injection of a gas comprising the alpha-emitter, an injection of a liquid comprising the alpha-emitter, an injection of an aqueous solution or dispersion comprising the alpha-emitter.

16. The method according to any one of the above claims, wherein
the MSR further comprises a moderator based on a material selected from a graphite material and/or a molten salt of a metal hydroxide.

17. The method according to any one of the above claims, wherein
the MSR is located on a marine structure, preferably a barge.

18. A molten salt reactor (MSR) adapted to be operated with the method according to any one of the claims 1 to 17, wherein the MSR reactor comprises means for adding an alpha-emitter to the molten salt.

Figure 1

Figure 2

Figure 3

Figure 4

Figure 5

Europäisches
Patentamt

European
Patent Office

Office européen
des brevets

# EUROPEAN SEARCH REPORT

**Application Number**

EP 23 16 9032

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2015/228363 A1 (DEWAN LESLIE C [US] ET AL) 13 August 2015 (2015-08-13)<br>* paragraphs [0097], [0161], [0168], [0176] – [0179]; figure 1; table 2 *<br>----- | 1-3,5,<br>12,14,18<br>4 | INV.<br>G21C7/34<br>G21C1/22<br>G21C3/54 |

**TECHNICAL FIELDS SEARCHED (IPC)**

G21C

The present search report has been drawn up for all claims

| Place of search | Date of completion of the search | Examiner |
|---|---|---|
| Munich | 20 June 2023 | Sewtz, Michael |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
........................................................................
& : member of the same patent family, corresponding
document

EPO FORM 1503 03.82 (P04C01)

Europäisches
Patentamt

European
Patent Office

Office européen
des brevets

**Application Number**

**EP 23 16 9032**

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

**see sheet B**

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

**1-5, 12, 14, 18**

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

The Search Division considers that the present European patent application does not comply with the requirements of unity of invention and relates to several inventions or groups of inventions, namely:

1. claims: 1-5, 12, 14, 18

    A molten salt nuclear reactor comprising a reactor core, a molten salt comprising at least one fluoride salt and/or at least one chloride salt and adding an alpha-emitter to the molten salt. The salt comprises a certain amount of the a specific alpha-emitter at a given amount.

    ---

2. claim: 6

    Adding of an alpha-emitter in a specific chemical state/compound.

    ---

3. claims: 7-9

    The molten salt is a molten fuel salt

    ---

4. claims: 10, 11, 13

    The molten salt is a molten coolant salt.

    ---

5. claim: 15

    Injection of the alpha-emitter in form of a gas, a liquid, aqueous solution or dispersion.

    ---

6. claim: 16

    The MSR comprises a moderator comprising graphite or a molten salt or a metal hydroxide.

    ---

7. claim: 17

    The MSR is located on a marine structure.

    ---

## ANNEX TO THE EUROPEAN SEARCH REPORT
## ON EUROPEAN PATENT APPLICATION NO.

EP 23 16 9032

This annex lists the patent family members relating to the patent documents cited in  the above-mentioned European search report.
The members are as contained in the European Patent Office EDP file on
The European Patent Office is in no way liable for these particulars which are merely given for the purpose of information.

20-06-2023

| Patent document cited in search report | | Publication date | Patent family member(s) | | Publication date |
|---|---|---|---|---|---|
| US 2015228363 | A1 | 13-08-2015 | CA | 2883966 A1 | 13-03-2014 |
| | | | EP | 2893537 A2 | 15-07-2015 |
| | | | SG | 11201501621W A | 29-04-2015 |
| | | | US | 2015228363 A1 | 13-08-2015 |
| | | | WO | 2014039641 A2 | 13-03-2014 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4829191 A
- US 8442182 B
- WO 2022053396 A
- WO 2018229265 A

**Non-patent literature cited in the description**

- **J. R. ENGEL ; P. N. HAUBENREICH ; B. E. PRINCE.** *MSRE NEUTRON SOURCE REQUIRE-MENTS ORNL-TM-0935,* 1964
- **LAWRENCE T. DAUER et al.** Radiation safety considerations for the use of RaCl2 DE in men with castration-resistant prostate cancer. *Health Phys.,* April 2014, vol. 106 (4), 494-504
- SOURCES 4C: A Code for Calculating (a,n), Spontaneous Fission, and Delayed Neutron Sources and Spectra, LA-UR-02-1839. **W. B. WILSON ; R. T. PERRY ; E. F. SHORES ; W. S. CHARLTON ; T. A. PARISH ; G. P. ESTES ; T. H. BROWN ; E. D. ARTHUR ; M. BOZOIAN ; T. R. ENGLAND.** Technical report. Los Alamos National Laboratory, 2002
- **G. E. HANSEN.** *Assembly of Fissionable Material in the Presence of a Weak Neutron Source,* 13 May 2017, 709-719